# EUROPÄISCHE PATENTSCHRIFT

(11) **EP 3 672 919 B1**
(45) Veröffentlichungstag und Bekanntmachung des Hinweises auf die Patenterteilung: **07.07.2021**
(21) Anmeldenummer: 18755799.6
(22) Anmeldetag: 15.08.2018
(51) Int. Cl.: C04B 7/36

(54) **ANLAGE UND VERFAHREN ZUR HERSTELLUNG VON ZEMENTKLINKER**
SYSTEM AND METHOD FOR PRODUCING CEMENT CLINKER
DISPOSITIF ET PROCÉDÉ DE PRODUCTION DE CLINKER DE CIMENT

(30) Priorität: 22.08.2017 DE 102017119155
(43) Veröffentlichungstag der Anmeldung: 01.07.2020
(73) Patentinhaber: thyssenkrupp Industrial Solutions AG, 45143 Essen (DE); thyssenkrupp AG, 45143 Essen (DE)
(72) Erfinder: BRINKMANN, Christian, 33611 Bielefeld (DE); ADLER, Klaus, 33378 Rheda-Wiedenbrück (DE); BEILMANN, Reinhard, 59302 Oelde (DE)
(74) Vertreter: thyssenkrupp Intellectual Property GmbH
(86) Internationale Anmeldenummer: PCT/EP2018/072079
(87) Internationale Veröffentlichungsnummer: WO 2019/038148

(56) Entgegenhaltungen:
- EP-A2- 1 316 536
- DE-B3-102009 059 110
- STEVEN W. MILLER: "Process Solutions for Reducing Emissions", PRODIT PRODUCING TECHNOLGY SEMINAR, 3 October 2002 (2002-10-03), pages 1-7, Allentown

## Beschreibung

Die Erfindung betrifft eine Anlage und ein Verfahren zur Herstellung von Zementklinker.

Durch die bei der Zementklinkerherstellung zum Einsatz kommenden Rohmaterialien und Brennstoffe werden Schadstoffe freigesetzt, die Kreisläufe zwischen dem Vorwärmer und dem Ofen ausbilden. Zur Reduzierung der Schadstoffe ist es daher bekannt, einen Teil der Ofenabgase über eine Bypassleitung abzuzweigen und von den Schadstoffen zu reinigen. Je nach Schadstoffanfall kommen dabei Bypassraten von 3% bis über 30% zur Anwendung.

Aus der DE 38 29 853 C1 ist ein Verfahren zur Reduzierung von Salzkreisläufen bei der Zementklinkerherstellung bekannt, bei dem über eine Bypassleitung ein mit Schadstoff belasteter Teil der Ofenabgase entnommen wird, der anschließend abgekühlt und einer Staubabscheidung zugeführt wird. Das entstaubte Bypassgas wird in den Rohmehl-Vorwärmer rezirkuliert. Hierdurch bietet sich die Möglichkeit, dass eine nach dem Vorwärmer angeordnete Entstickungsvorrichtung auch für die Entstickung der Bypassgase genutzt werden kann. Es besteht allerdings der Nachteil, dass ein vorgegebener Vorwärmer durch die Größe seiner Zyklone und des nachgeschalteten Ventilators in der durchleitbaren Gasmenge limitiert ist. Daher müssen die Ofenabgase entsprechend reduziert werden, wodurch die Klinkerleistung der Ofenanlage absinkt.

DE 10 2009 059110 offenbart ein Verfahren und Anlage zur Herstellung von Zementklinker. Das entstaubte Gas wird hier nicht direkt als Brennluft in den Ofen eingeführt aber seine Wärme wird über einen Wärmetauscher dem Ofengas zugeführt.

Der Erfindung liegt nun die Aufgabe zugrunde, ein Konzept zur Entstickung der Bypassgase anzugeben, bei dem die Leistung der Ofenanlage weit weniger beeinflusst wird.

Erfindungsgemäß wird diese Aufgabe durch die Merkmale der Ansprüche 1 und 7 gelöst.

Die erfindungsgemäße Anlage zur Herstellung von Zementklinker besteht im Wesentlichen aus
(a) einem Vorwärmer zum Vorwärmen von Zementrohmaterial zu vorgewärmten Zementrohmehl,
(b) einem Calcinator zum Calcinieren des vorgewärmten Zementrohmehls zu calciniertem Zementrohmehl,
(c) einem Ofen zum Fertigbrennen des calcinierten Zementrohmehls zu Zementklinker, wobei Ofenabgase entstehen,
(d) einem Kühler zum Kühlen des Zementklinkers sowie
(e) einem Bypasssystem mit
   (e1) einer zwischen dem Ofen und dem Calcinator angeschlossenen Bypassleitung zum Abzweigen eines Teils der vom Ofen zum Calcinator strömenden Ofenabgase als Bypassgas,
   (e2) einer Kühleinrichtung zum Kühlen des Bypassgases und
   (e3) einem Staubabscheider zum Abscheiden von im Bypassgas enthaltenen Staub mit einem Eingang zum Zuführen des abgekühlten Bypassgases, wenigstens einer Austragsöffnung zum Abführen des abgeschiedenen Staubes und einer Auslassöffnung für ein entstaubtes Bypassgas,

Weiterhin ist zwischen der Auslassöffnung des Staubabscheiders und dem Calcinator eine Rückführleitung für das entstaubte Bypassgas vorgesehen, wobei die Rückführleitung im Calcinator und/oder in einer zwischen Kühler und Calcinator angeordneten Tertiärluftleitung und/oder in einem Bereich zwischen Ofen und Calcinator mündet.

Das erfindungsgemäße Verfahren zur Herstellung von Zementklinker ist dadurch gekennzeichnet, dass das Zementrohmehl in einem Vorwärmer vorgewärmt, in einem Calcinator calciniert sowie in einem Ofen fertiggebrannt wird und der dabei entstehende Zementklinker anschließend in einem Kühler gekühlt wird, wobei ein Teil eines im Ofen entstehenden Ofenabgases als Bypassgas über eine zwischen dem Ofen und dem Calcinator angeschlossene Bypassleitung abgezweigt, gekühlt und entstaubt wird. Das entstaubte Bypassgas wird zum Calcinator und/oder in eine zwischen Kühler und Calcinator angeordnete Tertiärluftleitung und/oder in einen Bereich zwischen Ofen und Calcinator zurückgeführt.

Durch die Rückführung des entstaubten Bypassgases in den Calcinator bzw. in einen Bereich zwischen Ofen und Calcinator kann das abgekühlte Bypassgas, insbesondere wenn es mit Luft gekühlt wurde, als Verbrennungsluft im Calcinator verwendet werden. Dadurch substituiert das rückgeführte Bypassgas einen Teil der Tertiärluft, sodass sich die Gasmenge durch den Vorwärmer nicht signifikant ändert. So kann der Ofen mit einer im Wesentlichen unveränderten Klinkerleistung betrieben werden.

Die der Erfindung zugrundeliegenden Untersuchungen haben dabei auch ergeben, dass sich keine signifikanten Nachteile bezüglich des Wärmeverbrauchs der Gesamtanlage ergeben, jedoch die Anlagen zur NOₓ-Minderung im Calcinator (SNCR) bzw. im Ofenabgas (SCR) benutzt werden können, sodass eine separate NOₓ-Minderung des Bypassabgases nicht notwendig ist.

Gemäß einer bevorzugten Ausgestaltung der Erfindung wird das Bypassgas in der Kühleinrichtung durch Zuführen von Luft abgekühlt, wodurch die gasförmigen Schadstoffe im Bypassgas am mitgeführten Staub kondensieren und im anschließenden Staubabscheider abgeschieden werden können. Darüber hinaus wird der Sauerstoffgehalt des Bypassgases durch die Vermischung mit Luft entsprechend erhöht, sodass das rückgeführte Bypassgas im Calcinator als Verbrennungsluft eingesetzt werden kann.

Gemäß einer weiteren Ausgestaltung der Erfindung ist der Staubabscheider als Heißgasfilter für einen Temperaturbereich von mehr als 300°C ausgelegt. Hierfür kann beispielsweise ein Elektrofilter, ein keramischer Filter oder auch wenigstens ein Zyklon zur Anwendung kommen. Die Temperatur der Bypassgase muss zum einen so niedrig sein, dass sich die abzuscheidenden Schadstoffe an den Staubpartikeln anlagern und andererseits aber möglichst hoch, um unnötige Wärmeverluste zu vermeiden. Je nach abzuscheidenden Schadstoffen beträgt die Heißgasfiltrationstemperatur, also die Temperatur, bei der das Bypassgas dem Staubabscheider zugeführt wird, 300° bis 550°C, vorzugsweise 400° bis 500°C. Nachdem das im Bereich des Calcinators zurückgeführte, entstaubte Bypassgas einen Teil der sonst im Calcinator erforderlichen Tertiärluft ersetzt, kann die im Calcinator nicht benötigte Tertiärluft (Abluft des Kühlers aus einem vorderen Bereich des Kühlers) anderweitig, insbesondere zur Wärmerückgewinnung genutzt werden, wodurch sich die Gesamtwärmebilanz weiter verbessert.

Bei den der Erfindung zugrundeliegenden Untersuchungen hat sich weiterhin herausgestellt, dass zweckmäßigerweise nicht mehr als 3 bis 15%, vorzugsweise 5 bis 12% der im Ofen entstehenden Ofenabgase als Bypassgas abgezweigt werden sollten. Bei einer höheren Bypassrate würde sich ansonsten der Kühlerwirkungsgrad aufgrund der dann stark fallenden Tertiärluftmenge deutlich reduzieren. In einem solchen Fall kann der geringere Kühlerwirkungsgrad aber durch das Vorsehen einer Anlage zur Wärmerückgewinnung, welche mit der Kühlermittenluft betrieben wird, sinnvoll ausgeglichen werden.

In der Zeichnung zeigen
- Fig. 1: eine schematische Darstellung einer Anlage zur Herstellung von Zementklinker mit Rückführung des entstaubten Bypassgases in einen Bereich zwischen Ofen und Calcinator,
- Fig. 2: eine schematische Darstellung einer Anlage zur Herstellung von Zementklinker mit Rückführung des entstaubten Bypassgases in eine zwischen Kühler und Calcinator angeordnete Tertiärluftleitung und
- Fig. 3: eine schematische Darstellung einer Anlage zur Herstellung von Zementklinker mit Rückführung des entstaubten Bypassgases direkt in den Calcinator.

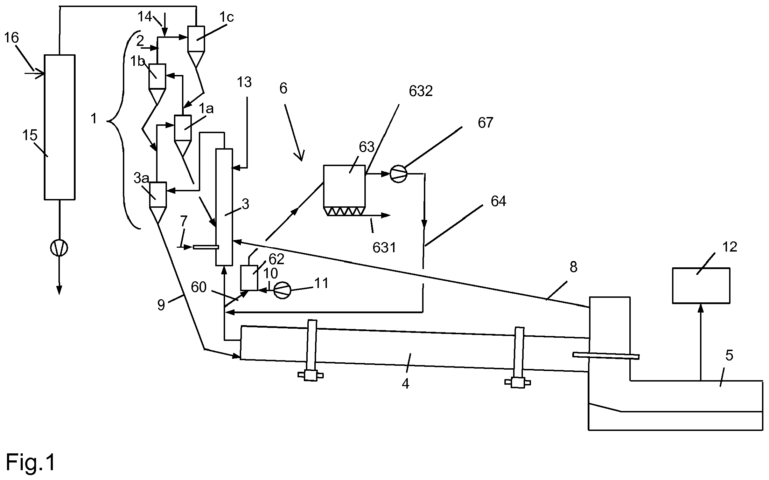

Die in Fig. 1 dargestellte Anlage besteht im Wesentlichen aus einem Vorwärmer 1 zum Vorwärmen von Zementrohmaterial 2 zu vorgewärmten Zementrohmehl, einem Calcinator 3 zum Calcinierten des vorgewärmten Zementrohmehls zu calciniertem Zementrohmehl, einem Ofen 4 zum Fertigbrennen des calcinierten Zementrohmehls zu Zementklinker, einem Kühler 5 zum Kühlen des Zementklinkers sowie ein Bypasssystem 6.

Der Vorwärmer 1 ist im dargestellten Ausführungsbeispiel als Schwebegasvorwärmer mit mehreren, übereinander angeordneten Zyklonen 1a bis 1c ausgebildet. Der Calcinator 3 wird durch einen Flugstromreaktor gebildet und wird von den Abgasen des Drehrohrofens 4 von unten nach oben durchströmt. Das vorgewärmte Zementrohmehl wird in üblicher Form in einem unteren Bereich des Calcinators 3 in das Ofenabgas aufgegeben. Im Bereich des Calcinators 3 sind zudem ein oder mehrere Brennstoffzufuhrstellen 7 vorgesehen, über die der für die Calcination erforderliche Brennstoff zugeführt wird. Die Verbrennungsluft wird über eine vom Kühler 5 kommende Tertiärluftleitung 8 zugeführt, wobei die Tertiärluft gewünschtenfalls gestuft, d.h. in unterschiedlichen Höhen eingebracht wird. Am Ende des Calcinators 3 ist ein Abscheidezyklon 3a vorgesehen, der das Abgas vom calcinierten Zementrohmehl trennt. Während das Abgas zur Vorwärmung des Zementrohmaterials 2 im Vorwärmer 1 genutzt wird, gelangt das calcinierte Zementrohmehl über eine Leitung 9 in den Ofen 4. Der Ofen 4 ist vorzugsweise als Drehrohrofen ausgebildet, an den sich unmittelbar der Kühler 5 anschließt.

Zur Unterbrechung etwaiger Schadstoffkreisläufe, wie Alkali- oder Chlorkreisläufe, ist das Bypasssystem 6 vorgesehen, dass eine zwischen dem Ofen 4 und dem Calcinator 3 angeschlossene Bypassleitung 60 zum Abzweigen eines Teils der vom Ofen 4 zum Calcinator 3 strömenden Abgase als Bypassgas aufweist. Die Bypassleitung 60 mündet in einer Kühleinrichtung 61 zum Kühlen des Bypassgases, wobei über eine Kühlluftzuführöffnung Luft 10 mit Hilfe eines Ventilators 11 zugeführt wird.

Das Bypassgas weist bei der Abzweigung zwischen dem Ofen 4 und dem Calcinator 3 eine Temperatur im Bereich von 1100 bis 1200°C auf und wird in der Kühleinrichtung 61 auf eine Temperatur im Bereich von 300° bis 550°C, vorzugsweise im Bereich von 400° bis 500°C abgekühlt. Mit dieser Temperatur strömt das Gas anschließend in einen Staubabscheider 63, der als Heißgasfilter für einen Temperaturbereich von mehr als 300°, insbesondere für einen Bereich von 300° bis 550°C, vorzugsweise 400° bis 500°C ausgelegt ist. Er wird beispielsweise durch einen Elektrofilter, einen keramischen Filter oder wenigstens einen Zyklon gebildet. Der abgeschiedene Staub wird über eine Austragsöffnung 631 ausgeschleust, während das entstaubte Bypassgas über eine Auslassöffnung 632 und eine Rückführleitung 64 in einem Bereich zwischen Ofen und Calcinator zurückgeführt wird. Das Bypasssystem 6 weist hierzu einen Ventilator 67 auf, mit dessen Hilfe das Bypassgas abgezweigt und das entstaubte Bypassgas zurückgeführt wird.

Das zurückgeführte, entstaubte Bypassgas wurde durch die Kühlluft 10 in der Kühleinrichtung 11 im Sauerstoffgehalt erhöht und dient nun zusammen mit dem Ofenabgasen als Verbrennungsluft im Calcinator 3. Es ersetzt somit einen Teil der über die Tertiärluftleitung 8 zugeführten Tertiärluft. Der nicht verwendete Teil der im Kühler 5 entstehenden Tertiärluft und ggf. auch eine andere Abluft des Kühlers 5 kann beispielsweise in einer Wärmerückgewinnungsanlage 12 genutzt werden, um die Wärmebilanz weiter zu verbessern.

Die Abgase aus dem Ofen 4 und dem Calcinator 3 enthalten üblicherweise Stickoxide in so großen Mengen, dass Entstickungsmaßnahmen vorgenommen werden müssen. Im Bereich des Calcinators 3, insbesondere in seinem oberen Bereich, hat es sich als vorteilhaft herausgestellt, wenn dort eine Entstickung nach dem SNCR-Verfahren durchgeführt wird, indem ein ammoniakhaltiges Reduktionsmittel 13 eingebracht wird. Das SNCR-Verfahren bietet sich im oberen Bereich des Calcinators 3 in besonderem Maße an, da dort die für das SNCR-Verfahren optimalen Temperaturen im Bereich um 950°C vorliegen. Die Rückführung des Bypassgases in den Calcinator hat somit auch den weiteren Effekt, dass das SNCR-Verfahren auch auf das Bypassgas angewendet werden kann. Würde man stattdessen das Bypassgas in die Atmosphäre entlassen, müssten separate Maßnahmen ergriffen werden. Da die Temperaturen im Bypasssystem zu niedrig für das SNCR-Verfahren sind, müsste entweder eine Temperaturerhöhung erfolgen oder ein anderes Entstickungsverfahren angewendet werden.

Als alternative oder zusätzliche Entstickungsmaßnahme kommt eine Entstickung der Abgase mittels dem SCR-Verfahren in Betracht. Hierfür wird in Strömungsrichtung der Abgase nach dem Vorwärmer ein SCR-Katalysator 15 angeordnet, bei dem ebenfalls eine Eindüsung eines ammoniakhaltigen Reduktionsmittels 16 vorgesehen werden kann. Durch die Rückführung der Bypassgases können diese gemeinsam mit den Ofen-/Calcinatorabgasen entstickt werden.

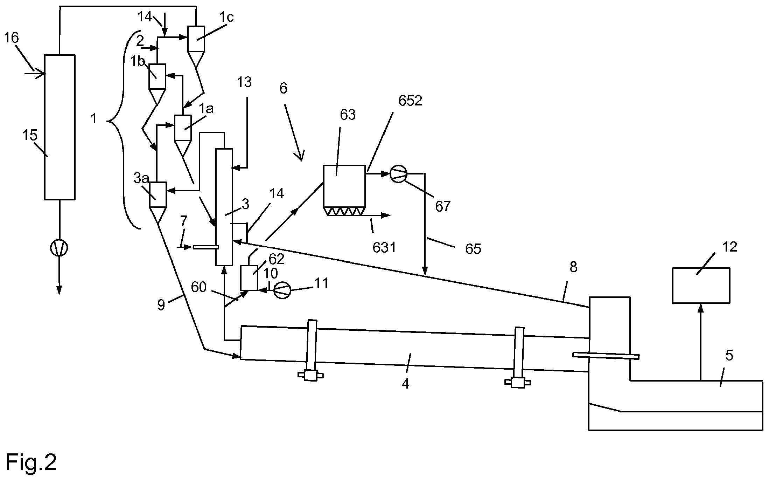

Das Ausführungsbeispiel gemäß Fig. 2 unterscheidet sich nur dadurch, dass für die Rückführung der entstaubten Bypassgase eine Rückführleitung 65 vorgesehen ist, die in der vom Kühler 5 zum Calcinator 3 führenden Tertiärluftleitung 8 mündet. Das rückgeführte Bypassgas ersetzt aber auch bei dieser Variante einen Teil der Tertiärluft, die dann beispielsweise in der Wärmerückgewinnungseinrichtung 12 verwertet werden kann.

Wie zuvor schon erwähnt, kann die Tertiärluft auch gestuft, also in mehreren Ebenen zugeführt werden. Im Ausführungsbeispiel der Fig. 2 ist daher eine Abzweigung 14 der Tertiärluftleitung 8 vorgesehen, über die Tertiärluft bzw. ein Gemisch aus Tertiärluft und entstaubtem Bypassgas in einer höheren Ebene des Calcinators 3 zugeführt werden kann.

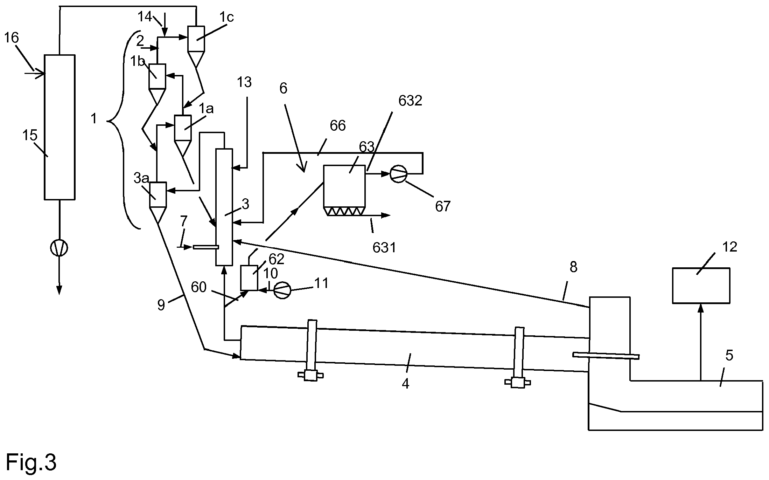

Fig. 3 zeigt schließlich ein Ausführungsbeispiel, bei der eine Rückführleitung 66 für das entstaubte Bypassgas direkt im Calcinator 3 mündet, sodass die Tertiärluft über die Tertiärluftleitung 8 und das entstaubte Bypassgas über die Rückführleitung 66 separat voneinander zugeführt werden. Im dargestellten Ausführungsbeispiel ist wiederum eine gestufte Luftzufuhr vorgesehen, indem die Tertiärluft weiter unten und das entstaubte Bypassgas weiter oben im Calcinator 3 eingeführt wird. Die Rückführung des Bypassgases in den Calcinator hat insbesondere folgende Vorteile:
- Nutzung der für die Ofenabgase vorhandenen SNCR- bzw. SCR-Vorrichtung für das entstaubte Bypassgas,
- annähernd gleiche Geschwindigkeiten in den Zyklon des Vorwärmers auch bei unterschiedlichen Bypassraten,
- eine höhere Tertiärlufttemperatur, die sich durch eine Verringerung der Tertiärluftmenge ergibt,
- besseres Kapazitätsstromverhältnis zwischen Gas und Mehl im Vorwärmer, sodass das Mehl auf eine höhere Temperatur vorgewärmt wird, bevor es in den Calcinator gelangt,
- höhere Ofenabgastemperatur, welche vorzugsweise zum Betreiben eines SCR-Katalysators genutzt werden kann,
- höhere Verwertungswärme und -temperaturen bei einer Wärmerückgewinnung durch die Abgase des Kühlers.

## Patentansprüche

1. Anlage zur Herstellung von Zementklinker mit
(a) einem Vorwärmer (1) um Vorwärmen von Zementrohmaterial (2) zu vorgewärmten Zementrohmehl,
(b) einem Calcinator (3) zum Calcinieren des vorgewärmten Zementrohmehls zu calciniertem Zementrohmehl,
(c) einem Ofen (4) zum Fertigbrennen des calcinierten Zementrohmehls zu Zementklinker, wobei Ofenabgase entstehen,
(d) einem Kühler (5) zum Kühlen des Zementklinkers sowie
(e) einem Bypasssystem (6) mit
(e1) einer zwischen dem Ofen (4) und dem Calcinator (3) angeschlossenen Bypassleitung (60) zum Abzweigen eines Teils der vom Ofen zum Calcinator (3) strömenden Ofenabgase als Bypassgas,
(e2) einer Kühleinrichtung (61) zum Kühlen des Bypassgases und
(e3) einem Staubabscheider (63) zum Abscheiden von im Bypassgas enthaltenen Staub mit einem Eingang zum Zuführen des abgekühlten Bypassgases, wenigstens einer Austragsöffnung (631) zum Abführen des abgeschiedenen Staubes und einer Auslassöffnung (632) für ein entstaubtes Bypassgas,
**dadurch gekennzeichnet, dass**
(f) zwischen der Auslassöffnung (631) des Staubabscheiders (63) und dem Calcinator (3) eine Rückführleitung (64, 65, 66) für das entstaubte Bypassgas vorgesehen ist, wobei die Rückführleitung im Calcinator (3) und/oder in einer zwischen Kühler (5) und Calcinator angeordneten Tertiärluftleitung (8) und/oder in einem Bereich zwischen Ofen (4) und Calcinator (3) mündet.

2. Anlage nach Anspruch 1, **wobei** die Kühleinrichtung (61) eine Kühlluftzuführöffnung (62) zum Zuführen von Kühlluft in das Bypassgas aufweist.

3. Anlage nach Anspruch 1, **wobei** der Staubabscheider (63) als Heißgasfilter für einen Temperaturbereich von mehr als 300°C ausgelegt ist.

4. Anlage nach Anspruch 1, **wobei** der Staubabscheider (63) durch einen Elektrofilter, einen keramischen Filter oder durch wenigstens einen Zyklon gebildet wird.

5. Anlage nach Anspruch 1, **wobei** im Bypasssystem (6) ein Ventilator (15) zum Abzweigen des Bypassgases und zum Zurückführen des entstaubten Bypassgases vorgesehen ist.

6. Anlage nach Anspruch 1, **wobei** der Kühler (5) mit einem Wärmerückgewinnungssystem (12) zur Verwertung von im Kühler (5) entstehender Abwärme in Verbindung steht.

7. Verfahren zur Herstellung von Zementklinker, wobei Zementrohmehl (2) in einem Vorwärmer (1) vorgewärmt, in einem Calcinator (3) calciniert sowie in einem Ofen (4) fertiggebrannt wird und der dabei entstehende Zementklinker anschließend in einem Kühler (5) gekühlt wird, wobei ein Teil eines im Ofen (4) entstehenden Ofenabgases als Bypassgas über eine zwischen dem Ofen (4) und dem Calcinator (3) angeschlossene Bypassleitung (60) abgezweigt, gekühlt und entstaubt wird,
**dadurch gekennzeichnet, dass** das entstaubte Bypassgas zum Calcinator (3) und/oder in eine zwischen Kühler (5) und Calcinator (3) angeordnete Tertiärluftleitung (8) und/oder in einem Bereich zwischen Ofen (4) und Calcinator (3) zurückgeführt wird.

8. Verfahren nach Anspruch 7, **wobei** die Kühlung des Bypassgases auf eine Temperatur im Bereich von 300° bis 550°C, vorzugsweise im Bereich von 400° bis 500° erfolgt

9. Verfahren nach Anspruch 7, **wobei** die Entstaubung des Bypassgases in einem Temperaturbereich von 300° bis 550°C, vorzugsweise in einem Temperaturbereich von 400° bis 500° erfolgt.

10. Verfahren nach Anspruch 7, **wobei** die Kühlung des Bypassgases mit Luft erfolgt.

11. Verfahren nach Anspruch 7, **wobei** 3 bis 15%, vorzugsweise 5 bis 12% der im Ofen (4) entstehenden Ofenabgases als Bypassgas abgezweigt werden.

12. Verfahren nach Anspruch 7, **wobei** ein Teil der beim Kühlen des Zementklinkers im Kühler (5) entstehenden Abwärme zur Wärmerückgewinnung genutzt wird.

13. Verfahren nach Anspruch 7, **wobei** im Bereich des Calcinators (3) eine Entstickung von den Calcinator (3) durchströmenden Abgasen, einschließlich des rückgeführten Bypassgases, stattfindet.

## Claims

1. Installation for producing cement clinker, having
(a) a preheater (1) for preheating raw cement material (2) to form preheated raw cement meal,
(b) a calciner (3) for calcining the preheated raw cement meal to form calcined raw cement meal,
(c) a kiln (4) for final burning of the calcined raw cement meal to form cement clinker, wherein kiln offgases are produced,
(d) a cooler (5) for cooling the cement clinker, and
(e) a bypass system (6) having
(e1) a bypass line (60) connected between the kiln (4) and the calciner (3) and serving for branching off, as bypass gas, a portion of the kiln offgases flowing from the kiln to the calciner (3),
(e2) a cooling device (61) for cooling the bypass gas, and
(e3) a dust separator (63) for separating dust contained in the bypass gas, which has an inlet for the supply of the cooled bypass gas, has at least one discharge opening (631) for the removal of the separated dust, and has an outlet opening (632) for a dedusted bypass gas,
**characterized in that**
(f) provision is made between the outlet opening (631) of the dust separator (63) and the calciner (3) of a recirculation line (64, 65, 66) for the dedusted bypass gas, wherein the recirculation line opens into the calciner (3) and/or into a tertiary air line (8) arranged between the cooler (5) and the calciner and/or into a region between the kiln (4) and the calciner (3).

2. Installation according to Claim 1, **wherein** the cooling device (61) comprises a cooling-air supply opening (62) for the supply of cooling air into the bypass gas.

3. Installation according to Claim 1, **wherein** the dust separator (63) is designed as a hot-gas filter for a temperature range exceeding 300°C.

4. Installation according to Claim 1, **wherein** the dust separator (63) is formed by an electrostatic filter, by a ceramic filter or by at least one cyclone.

5. Installation according to Claim 1, **wherein** provision is made in the bypass system (6) of a fan (15) for branching-off of the bypass gas and for recirculation of the dedusted bypass gas.

6. Installation according to Claim 1, **wherein** the cooler (5) is connected to a heat recovery system (12) for use of waste heat generated in the cooler (5) .

7. Method for producing cement clinker, wherein raw cement meal (2) is preheated in a preheater (1), is calcined in a calciner (3) and is subjected to final burning in a kiln (4), and the cement clinker produced in the process is then cooled in a cooler (5), wherein a portion of a kiln offgas produced in the kiln (4) is branched off as bypass gas via a bypass line (60) connected between the kiln (4) and the calciner (3), is cooled and is dedusted, **characterized in that** the dedusted bypass gas is recirculated to the calciner (3) and/or into a tertiary air line (8) arranged between the cooler (5) and the calciner (3) and/or into a region between the kiln (4) and the calciner (3).

8. Method according to Claim 7, **wherein** the bypass gas is cooled to a temperature in the range from 300 to 550°C, preferably in the range from 400 to 500°C.

9. Method according to Claim 7, **wherein** the bypass gas is dedusted in a temperature range from 300 to 550°C, preferably in a temperature range from 400 to 500°C.

10. Method according to Claim 7, **wherein** the bypass gas is cooled with air.

11. Method according to Claim 7, **wherein** 3 to 15%, preferably 5 to 12% of the kiln offgas produced in the kiln (4) is branched off as bypass gas.

12. Method according to Claim 7, **wherein** a portion of the waste heat generated during the cooling of the cement clinker in the cooler (5) is used for heat recovery.

13. Method according to Claim 7, **wherein** denitrification of offgases flowing through the calciner (3), including the recirculated bypass gas, takes place in the region of the calciner (3).

## Revendications

1. Installation de production de clinker de ciment comprenant
(a) un préchauffeur (1) destiné à préchauffer la matière première de ciment (2) pour obtenir une farine crue de ciment préchauffée,
(b) un calcinateur (3) destiné à calciner la farine crue de ciment préchauffée pour obtenir une farine crue de ciment calcinée,
(c) un four (4) destiné à la combustion finale de la farine crue de ciment calcinée pour obtenir un clinker de ciment, des gaz d'échappement de four étant générés,
(d) un refroidisseur (5) destiné à refroidir le clinker de ciment et
(e) un système de dérivation (6) comprenant
(e1) une conduite de dérivation (60) raccordée entre le four (4) et le calcinateur (3) et destinée à dériver une partie des gaz d'échappement de four, s'écoulant du four vers le calcinateur (3), comme gaz de dérivation,
(e2) un dispositif de refroidissement (61) destiné à refroidir le gaz de dérivation et
(e3) un séparateur de poussière (63) destiné à séparer la poussière contenue dans le gaz de dérivation, ledit séparateur comprenant une entrée destinée à amener le gaz de dérivation refroidi, au moins une ouverture de décharge (631) destinée à évacuer la poussière séparée et une ouverture de sortie (632) destinée à un gaz de dérivation dépoussiéré,
**caractérisée en ce que**
(f) une conduite de retour (64, 65, 66) destinée au gaz de dérivation dépoussiéré est prévue entre l'ouverture de sortie (631) du séparateur de poussières (63) et le calcinateur (3), la conduite de retour débouchant dans le calcinateur (3) et/ou dans une conduite d'air tertiaire (8) disposée entre le refroidisseur (5) et le calcinateur et/ou dans une région située entre le four (4) et le calcinateur (3).

2. Installation selon la revendication 1, le dispositif de refroidissement (61) comportant une ouverture d'alimentation en air de refroidissement (62) destiné à amener de l'air de refroidissement dans le gaz de dérivation.

3. Installation selon la revendication 1, le séparateur de poussières (63) étant conçu comme un filtre à gaz chauds destiné à une gamme de températures supérieure à 300 °C.

4. Installation selon la revendication 1, le séparateur de poussières (63) étant formé par un électrofiltre, un filtre céramique ou au moins un cyclone.

5. Installation selon la revendication 1, un ventilateur (15) étant prévu dans le système de dérivation (6) pour dériver le gaz de dérivation et pour ramener le gaz de dérivation dépoussiéré.

6. Installation selon la revendication 1, le refroidisseur (5) étant relié à un système de récupération de chaleur (12) afin d'utiliser la chaleur perdue générée dans le refroidisseur (5).

7. Procédé de production de clinker de ciment, la farine crue de ciment (2) étant préchauffée dans un préchauffeur (1), calcinée dans un calcinateur (3) et soumise à une combustion finale dans un four (4) et le clinker de ciment résultant étant ensuite refroidi dans un refroidisseur (5), une partie d'un gaz d'échappement de four produit dans le four (4) étant dérivée comme gaz de dérivation par le biais d'une conduite de dérivation (60) raccordée entre le four (4) et le calcinateur (3), refroidie et dépoussiérée,
**caractérisé en ce que** le gaz de dérivation dépoussiéré est ramené au calcinateur (3) et/ou dans une conduite d'air tertiaire (8) disposée entre le refroidisseur (5) et le calcinateur (3) et/ou dans une région située entre le four (4) et le calcinateur (3).

8. Procédé selon la revendication 7, le refroidissement du gaz de dérivation étant effectué à une température dans la gamme allant de 300° à 550°C, de préférence dans la gamme allant de 400 à 500 °C.

9. Procédé selon la revendication 7, le dépoussiérage du gaz de dérivation étant effectué dans une gamme de températures allant de 300° à 550°C, de préférence dans une gamme de températures allant de 400° à 500°.

10. Procédé selon la revendication 7, le refroidissement du gaz de dérivation étant effectué avec de l'air.

11. Procédé selon la revendication 7, 3 à 15 %, de préférence 5 à 12 %, des gaz d'échappement de four produits dans le four (4) étant dérivés comme gaz de dérivation.

12. Procédé selon la revendication 7, une partie de la chaleur perdue générée lors du refroidissement du clinker de ciment dans le refroidisseur (5) étant utilisée pour la récupération de chaleur.

13. Procédé selon la revendication 7, une dénitrification des gaz d'échappement traversant le calcinateur (3), y compris le gaz de dérivation remis en circulation, étant effectuée dans la région du calcinateur (3).
